(19) Europäisches Patentamt / European Patent Office / Office européen des brevets

(11) **EP 2 804 449 A1**

(12) **EUROPEAN PATENT APPLICATION**

(43) Date of publication:
**19.11.2014 Bulletin 2014/47**

(51) Int Cl.:
**H05H 1/24** (2006.01)   **C04B 35/00** (2006.01)

(21) Application number: **14167853.2**

(22) Date of filing: **12.05.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.05.2013 JP 2013103563**

(71) Applicant: **NGK Insulators, Ltd.**
**Nagoya-city, Aichi 467-8530 (JP)**

(72) Inventors:
• **Kondo, Yoshimasa**
  **Nagoya-city, Aichi 467-8530 (JP)**
• **Yoshioka, Kunihiko**
  **Nagoya-city, Aichi 467-8530 (JP)**

(74) Representative: **Naylor, Matthew John et al**
**Mewburn Ellis LLP**
**33 Gutter Lane**
**London**
**EC2V 8AS (GB)**

(54) **Structural body and method for producing the same**

(57)     A structural body (10A) includes a tubular insulating body (14) having a hollow portion (12) and a conducting body (16) inserted into the hollow portion (12) in the insulating body (14), and the insulating body (14) and the conducting body (16) are directly integrated with each other by firing. In a tensile test in which the insulating body (14) is fixed, and a portion of the conducting body (16) that protrudes from the insulating body (14) is pulled in the axial direction, the displacement of the conducting body (16) with respect to the insulating body (14) is 5% or less of the axial direction length of the contact portion between the hollow portion (12) and the conducting body (16) under a tensile load per unit contact area between the insulating body (14) and the conducting body (16) of 0.05 kgf/mm$^2$ or less.

FIG. 1D

**Description**

CROSS-REFERENCE TO RELATED APPLICATION

This application is based upon and claims the benefit of priority from Japanese Patent Application No. 2013-103563 filed on May 15, 2013, the contents of which are incorporated herein by reference.

BACKGROUND OF THE INVENTION

Field of the Invention:

The present invention relates to a structural body containing an insulating body and a conductive material, which is suitable for use, e.g., in a dielectric-barrier discharge electrode, an ozone generator, or the like and further relates to a method for producing the structural body.

Description of the Related Art:

Heretofore, low-temperature plasma generators described, for example, in Japanese Patent No. 3015268 and International Publication No. 2008/108331 have been known as a structural body containing an insulating body and a conductive material.

In the low-temperature plasma generator described in Japanese Patent No. 3015268, an electrode contains a rod-shaped ceramic dielectric body having a through-hole extending in the longitudinal direction and a rod-shaped conductive body inserted into the through-hole in the ceramic dielectric body. Both ends of the conductive body and the ceramic dielectric body are integrally joined and sealed with a glass or an inorganic or organic adhesive. In particular, the low-temperature plasma generator has a plurality of the electrodes, which are connected to each other through the ceramic dielectric bodies in a line-contacted relation. More specifically, in the connecting process, a surface treatment agent containing a member selected from the group consisting of a metallic element, a rare-earth element, an inorganic salt, and an organic metallic compound including one of such elements is applied on surfaces of the rod-shaped conductive bodies or the rod-shaped ceramic dielectric bodies, and the applied agent is subjected to a heat treatment.

In an example described in International Publication No. 2008/108331, a conducting paste is closely attached to at least an inner surface of a space defined inside an insulating body, and the conducting paste is enclosed in the space, to obtain a pipe-like portion formed by the continuous conducting paste as a discharge electrode.

SUMMARY OF THE INVENTION

However, the electrode described in Japanese Patent No. 3015268 is obtained by bonding the separately prepared conductive body and insulating body with a resin or the like. Therefore, the electrode cannot exhibit a sufficient durability at a high temperature because of the heat resistance of the resin.

The electrode described in International Publication No. 2008/108331 has the conducting body derived from the paste on the inner surface of the insulating body. However, it is difficult to form the conducting body with a dense structure, and the electrode may cause abnormal electrical discharge.

The present invention has been made in view of the above problems, and an object of the present invention is to provide a structural body containing an insulating body and a conductive material, which can achieve at least the following advantageous effects (1) to (3):

(1) the structural body can contain a dense conducting body and a dense insulating body integrated with each other;
(2) the structural body can exhibit improved heat resistance, durability, voltage resistance, and the like; and
(3) the structural body hardly causes abnormal electrical discharge in, for example, a barrier discharge electrode, and can be suitably used as an electrode of an ozone generator.

Another object of the present invention is to provide a method for producing a structural body, which is capable of easily producing the above structural body having the advantageous effects.

[1] According to a first aspect of the present invention, there is provided a structural body including a tubular insulating body having a hollow portion and a conducting body inserted into the hollow portion in the insulating body. The insulating body and the conducting body are directly integrated with each other by firing. In a tensile test in which the insulating body is fixed, and a portion of the conducting body that protrudes from the insulating body is pulled in the axial direction, the displacement of the conducting body with respect to the insulating body is 5% or less of the axial direction length of the contact portion between the hollow portion and the conducting body under a tensile load per unit contact area between the insulating body and the conducting body of 0.05 kgf/mm$^2$ or less.

[2] According to a second aspect of the present invention, there is provided a structural body including a tubular insulating body having a hollow portion and a conducting body inserted into the hollow portion in the insulating body. The insulating body and the conducting body are directly integrated with each other by firing. In a withstand voltage test in which two of the structural bodies having the same shape are prepared and arranged parallel to each other, the distance between the arranged structural bodies is twice as large as the thickness of the insulating body, a direct voltage is applied between the structural bodies, and the applied voltage is gradually increased, the structural bodies do not cause insulation breakdown even if an average electric field applied between the structural bodies reaches 10 kV/mm.

The average electric field applied between the two structural bodies is of (the applied voltage)/(distance between the two conducting bodies). Thus, the average electric field is an average value of the electric field applied to the space between the two conducting bodies and the insulating bodies.

[3] According to a third aspect of the present invention, there is provided a structural body including a tubular insulating body having a hollow portion and a conducting body inserted into the hollow portion in the insulating body. The insulating body and the conducting body are directly integrated with each other by firing. In a tensile test in which the insulating body is fixed, and a portion of the conducting body that protrudes from the insulating body is pulled in the axial direction, the displacement of the conducting body with respect to the insulating body is 5% or less of the axial direction length of the contact portion between the hollow portion and the conducting body under a tensile load per unit contact area between the insulating body and the conducting body of 0.05 kgf/mm$^2$ or less. Further, in a withstand voltage test in which two of the structural bodies having the same shape are prepared and arranged parallel to each other, the distance between the arranged structural bodies is twice as large as the thickness of the insulating body, a direct voltage is applied between the structural bodies, and the applied voltage is gradually increased, the structural bodies do not cause insulation breakdown even if an average electric field applied between the structural bodies reaches 10 kV/mm.

The average electric field applied between the two structural bodies is of (the applied voltage)/(distance between the two conducting bodies). Thus, the average electric field is an average value of the electric field applied to the space between the two conducting bodies and the insulating bodies.

[4] In the first to third aspects, the structural body may satisfy the following relational expression (1):

$$\frac{|\alpha i - \alpha c| \left[\times 10^{-6}/K\right] \times 10^{-6} \times \Delta T[K] \times Ec[GPa] \times Ei[GPa]}{(Ec + Ei)[GPa]} \leqq 3 \times Si[GPa] \quad \cdot \ \cdot \ \cdot \ (1)$$

where $\alpha i$ represents the thermal expansion coefficient of the insulating body, $\alpha c$ represents the thermal expansion coefficient of the conducting body, $\Delta T$ represents the difference between the firing temperature and the room temperature, $Ec$ represents the Young's modulus of the conducting body, $Ei$ represents the Young's modulus of the insulating body, and $Si$ represents the flexural strength of the insulating body. The flexural strength of the insulating body is obtained by "Testing method for flexural strength (modulus of rupture) of fine ceramics at room temperature" of JIS R1601. Incidentally, the characters in the square brackets "[ ]" represent units, and the same applies hereinafter.

[5] In this case, the thermal expansion coefficient $\alpha i$ of the insulating body and the thermal expansion coefficient $\alpha c$ of the conducting body may satisfy the relation of:

$$1 \ [\times 10^{-6}/K] \ \leq \ (\alpha i - \alpha c) \ \leq \ 8 \ [\times 10^{-6}/K].$$

[6] In the first to third aspects, the conducting body may be made of a material containing a substance selected from the group consisting of molybdenum, tungsten, silver, copper, nickel, and alloys containing at least one thereof. Examples of such alloys include invar, kovar, inconel (registered trademark), and incoloy (registered trademark).

[7] In the first to third aspects, the insulating body may be made of a composite oxide or composite nitride containing one or more substances selected from the group consisting of barium oxide, bismuth oxide, titanium oxide, zinc oxide, neodymium oxide, titanium nitride, aluminum nitride, silicon nitride, alumina, silica, and mullite.

[8] In the first to third aspects, the structural body may be used for an electrode for dielectric-barrier discharge.

[9] In the first to third aspects, the structural body may be used for an electrode for dielectric-barrier discharge in an ozone generator.

[10] In the first to third aspects, the insulating body may have an extruded shape with the hollow portion being formed as a through-hole, and the conducting body may be a rod-shaped bulk conducting body inserted into the hollow portion in the insulating body.

[11] According to a fourth aspect of the present invention, there is provided a method for producing the structural body according to any one of the first to third aspects. The method includes a green-body preparation step of preparing a green body to be formed into the insulating body, the green body having a hollow portion, a preliminarily-fired body preparation step of degreasing and preliminarily-firing the green body to prepare a preliminarily-fired body, a conducting body insertion step of inserting a bulk conducting body into a hollow portion in the preliminarily-fired body, and a firing/integration step of firing the preliminarily-fired body together with the bulk conducting body inserted thereinto to produce the structural body.

[12] In this case, in the green-body preparation step, the green body may be formed into an extruded shape.

[13] Furthermore, in the preliminarily-fired body preparation step, the green body may be degreased and preliminarily-fired in an air atmosphere at a temperature lower than the firing temperature of the firing/integration step.

[14] In the firing/integration step, the preliminarily-fired body may be fired in an oxygen-free atmosphere at a temperature higher than the degreasing/preliminary-firing temperature of the preliminarily-fired body preparation step.

[15] According to a fifth aspect of the present invention, there is provided a method for producing the structural body according to any one of the first to third aspects. The method includes a green-body preparation step of preparing a green body to be formed into the insulating body, the green body having a hollow portion, a conducting body insertion step of inserting a bulk conducting body into the hollow portion in the green body, and a firing/integration step of firing the green body together with the bulk conducting body inserted thereinto to produce the structural body.

[16] In this case, in the firing/integration step, the green body may be fired in an atmosphere containing a small amount of oxygen.

[17] Furthermore, in the green-body preparation step, a starting material slurry containing at least a starting material powder and a dispersion medium may be shaped and solidified to prepare the green body.

[18] The starting material slurry may contain, as an organic binder, a gelling agent that is hardened by a chemical reaction.

According to the present invention, the structural body containing the insulating body and the conducting body can achieve the following advantageous effects:

(1) the structural body can contain a dense conducting body and a dense insulating body integrated with each other;
(2) the structural body can exhibit improved heat resistance, durability, voltage resistance, and the like; and
(3) the structural body hardly causes abnormal electrical discharge when used as a barrier discharge electrode, for example, and can be suitably used also as an electrode of an ozone generator.

Further, in the method for producing a structural body according to the present invention, the structural body having the above advantageous effects can be easily produced.

The above and other objects, features, and advantages of the present invention will become more apparent from the following description when taken in conjunction with the accompanying drawings in which preferred embodiments of the present invention are shown by way of illustrative example.

BRIEF DESCRIPTION OF THE DRAWINGS

FIG. 1A is a front view of a structural body according to a first embodiment (first structural body);
FIG. 1B is a side view of the first structural body;
FIG. 1C is a cross-sectional view taken along the line IC-IC of FIG. 1B;
FIG. 1D is a cross-sectional view taken along the line ID-ID of FIG. 1A;
FIG. 2 is an explanatory view illustrating a tensile test in which a portion of a conducting body protruding from an insulating body is pulled in an axial direction;
FIG. 3 is an explanatory view illustrating a withstand voltage test in which two structural bodies are arranged parallel to each other;
FIG. 4 is a process chart of a first production method for producing a structural body according to the present embodiment;
FIG. 5A is a front view of a green body prepared in a green-body preparation step;
FIG. 5B is a cross-sectional view taken along the line VB-VB of FIG. 5A;
FIG. 5C is a front view of a preliminarily-fired body prepared in a preliminarily-fired body preparation step;
FIG. 5D is a cross-sectional view taken along the line VD-VD of FIG. 5C;

FIG. 5E is a front view of a bulk conducting body inserted into a hollow portion of the green body in a conducting body insertion step;

FIG. 5F is a cross-sectional view taken along the line VF-VF of FIG. 5E;

FIG. 5G is a front view of a structural body produced in a firing/integration step;

FIG. 5H is a cross-sectional view taken along the line VH-VH of FIG. 5G;

FIG. 6 is a process chart of a second production method for producing a structural body according to the present embodiment;

FIG. 7A is a front view of a green body prepared in a green-body preparation step;

FIG. 7B is a cross-sectional view taken along the line VIIB-VIIB of FIG. 7A;

FIG. 7C is a front view of a bulk conducting body inserted into a hollow portion of the green body in a conducting body insertion step;

FIG. 7D is a cross-sectional view taken along the line VIID-VIID of FIG. 7C;

FIG. 7E is a front view of a structural body produced in a firing/integration step;

FIG. 7F is a cross-sectional view taken along the line VIIF-VIIF of FIG. 7E;

FIG. 8A is a front view of a structural body according to a second embodiment (second structural body);

FIG. 8B is a side view of the second structural body;

FIG. 8C is a cross-sectional view taken along the line VIIIC-VIIIC of FIG. 8B;

FIG. 8D is a cross-sectional view taken along the line VIIID-VIIID of FIG. 8A;

FIG. 9A is a front view of a structural body according to a third embodiment (third structural body);

FIG. 9B is a side view of the third structural body;

FIG. 9C is a cross-sectional view taken along the line IXC-IXC of FIG. 9B;

FIG. 9D is a cross-sectional view taken along the line IXD-IXD of FIG. 9A;

FIG. 10A is a front view of a structural body according to a fourth embodiment (fourth structural body);

FIG. 10B is a side view of the fourth structural body;

FIG. 10C is a cross-sectional view taken along the line XC-XC of FIG. 10B;

FIG. 10D is a cross-sectional view taken along the line XD-XD of FIG. 10A; and

FIG. 11 is an explanatory view illustrating an endurance test in which two structural bodies are arranged parallel to each other.

## DESCRIPTION OF THE PREFERRED EMBODIMENTS

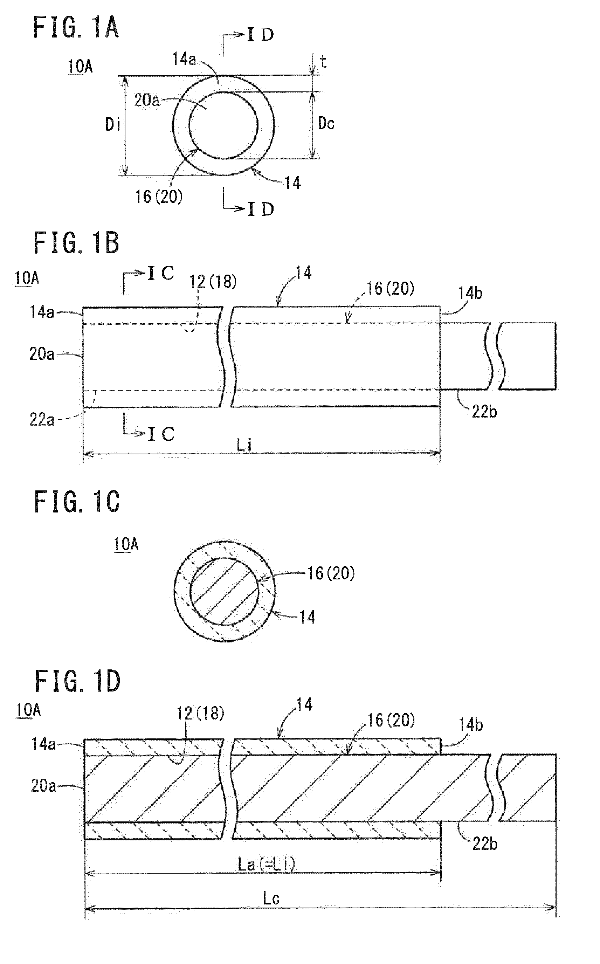

Several embodiments of the structural body and the production method of the structural body according to the present invention will be described below with reference to FIGS. 1A to 11. It should be noted that, in this description, a numeric range of "A to B" includes both the numeric values A and B as the lower limit and upper limit values.

As shown in FIGS. 1A to 1D, a structural body according to a first embodiment (hereinafter referred to as a first structural body 10A) contains a tubular insulating body 14 (dielectric body) having a hollow portion 12, and further contains a conducting body 16 inserted into the hollow portion 12 in the insulating body 14. The insulating body 14 and the conducting body 16 are directly integrated with each other by firing. In the case of using the first structural body 10A in an electrode or the like, the insulating body 14 may be referred to as a dielectric body for inducing a charge.

In the example of FIGS. 1A to 1D, the hollow portion 12 in the cylindrical insulating body 14 is a through-hole 18, and a rod of the conducting body 16 (hereinafter referred to as a conducting rod 20) extends through the through-hole 18. The through-hole 18 in the insulating body 14 has a circular cross-sectional shape, and similarly the conducting rod 20 has a circular cross-sectional shape. The axial direction length Lc of the conducting rod 20 is larger than the axial direction length Li of the insulating body 14. In this case, one end surface 20a of the conducting rod 20 approximately coincides with one end surface 14a of the insulating body 14. One end 22a of the conducting rod 20 does not protrude from the insulating body 14, and the other end 22b protrudes from the insulating body 14. For example, the other end 22b is electrically connected to a power supply (not shown) and acts as an extraction electrode.

The insulating body 14 has an outer diameter Di of 0.4 to 5 mm, an axial direction length Li of 5 to 100 mm, and a thickness t of 0.1 to 1.5 mm. The conducting rod 20 has an outer diameter Dc of 0.2 to 4.6 mm and an axial direction length Lc of 7 to 300 mm.

In a tensile test of the first structural body 10A, when the insulating body 14 is fixed, and a portion of the conducting body 16 (the other end 22b of the conducting rod 20) that protrudes from the insulating body 14 is pulled in the axial direction, the displacement of the conducting rod 20 with respect to the insulating body 14 is 5% or less of the axial direction length La of the contact portion between the hollow portion 12 and the conducting body 16 (corresponding to the axial direction length Li of the insulating body 14 in this case) under a tensile load per unit contact area between the insulating body 14 and the conducting rod 20 of 0.05 kgf/mm$^2$ or less.

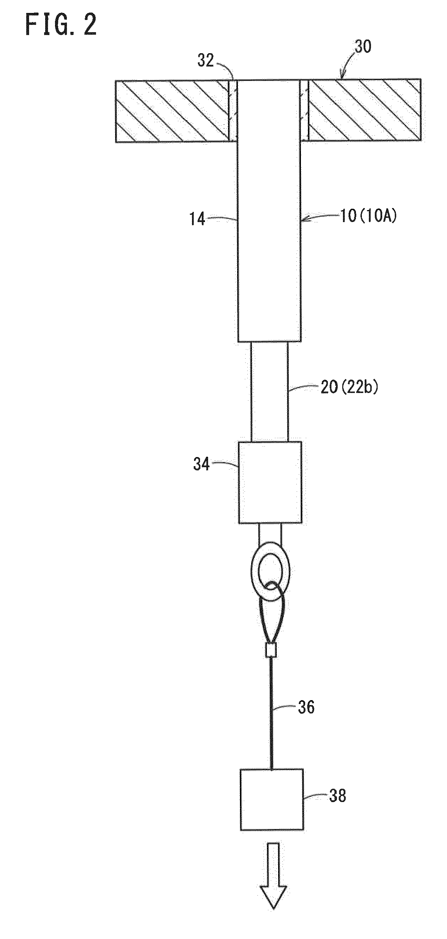

For example, the tensile test may preferably be performed as shown in FIG. 2.

Thus, a retainer 30, into which a structural body 10 (the first structural body 10A in this case) can be inserted, is prepared. The insulating body 14 in the first structural body 10A is fixed to the retainer 30 by a wax 32. The other end 22b of the conducting rod 20, which protrudes from the other end surface 14b (lower portion) of the insulating body 14, is fixed to an end of a wire 36 by using an appropriate connection jig 34.

A tensile load Ld [kgf] is quasi-statically (slowly) applied by increasing a weight 38 at the other end of the wire 36. For example, a container may be hung as the weight 38 from the other end of the wire 36, and the load can be continuously increased quasi-statically by pouring a liquid (e.g., water) into the container.

The contact area Cs between the insulating body 14 and the conducting body 16 (the conducting rod 20) corresponds to the contact area between the inner periphery of the hollow portion 12 in the insulating body 14 and the outer periphery of the conducting body 16. Therefore, the contact area Cs is obtained by multiplying the circumferential length of the conducting rod 20 by the axial direction length Li of the insulating body 14, i.e. by using Cs = $\pi \times$ Dc $\times$ Li.

In the flowing withstand voltage test using two first structural bodies 10A, the first structural bodies 10A do not cause insulation breakdown even when an average electric field of 10 kV/mm is applied between the two first structural bodies 10A.

[Withstand voltage test]

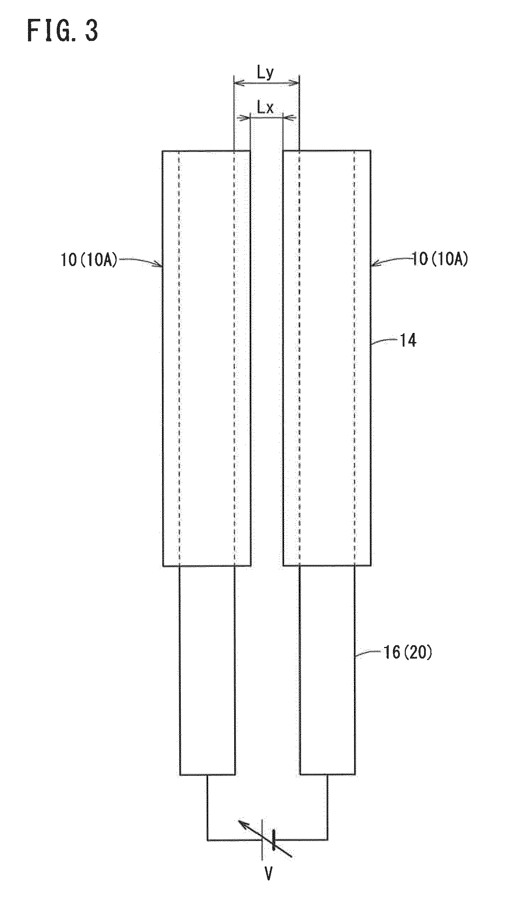

As shown in FIG. 3, two structural bodies 10 (two first structural bodies 10A in this case) having the same shape are prepared and arranged parallel to each other such that the distance Lx between the arranged structural bodies 10 is twice as large as the thickness t of the insulating body 14 (see FIG. 1A). Then, a direct voltage V is applied between the structural bodies 10, and the applied voltage V is gradually increased.

The distance Lx between the structural bodies 10 refers to the distance between the outer surfaces of the insulating bodies 14 facing each other. The average electric field applied between the two structural bodies 10 is V/Ly, where V represents the applied voltage and Ly represents the distance between the two conducting bodies 16. Thus, the average electric field is an average value of the electric field applied to the space between the two conducting bodies 16 and the insulating bodies 14.

In addition, the first structural body 10A preferably has the following characteristics.

In the first structural body 10A, the insulating body 14 and the conducting body 16 are directly integrated by firing. Therefore, it is preferred that the size and shrinkage ratio of a body (green body) for the insulating body 14 prior to firing are adjusted such that the fired insulating body 14 is in substantially tight contact with the conducting rod 20 after the body (green body) has been fired and shrunk into the insulating body 14. In this case, when $\alpha i$ represents the thermal expansion coefficient of the insulating body 14 and $\alpha c$ represents the thermal expansion coefficient of the conducting body 16, the thermal expansion coefficient difference $|\alpha i - \alpha c|$ between them is preferably small enough to suppress a stress generated in a cooling process. Specifically, the insulating body 14 and the conducting body 16 preferably satisfy the relation of $|\alpha i - \alpha c| \leq 8$ [$\times 10^{-6}$/K].

The thermal expansion coefficient $\alpha c$ of the conducting body 16 is preferably smaller than the thermal expansion coefficient $\alpha i$ of the insulating body 14. In this case, the contact between the insulating body 14 and the conducting body 16 can be easily controlled by utilizing the heat shrinkage in a cooling process after the firing. Specifically, the thermal expansion coefficients preferably satisfy the relation of 1 [$\times 10^{-6}$/K] $\leq (\alpha i - \alpha c) \leq 8$ [$\times 10^{-6}$/K].

When $\Delta T$ represents the difference between the firing temperature and the room temperature, Ec represents the Young's modulus of the conducting body 16, Ei represents the Young's modulus of the insulating body 14, and Si represents the flexural strength of the insulating body 14, the first structural body 10A preferably satisfies the following relational expression (1). In this case, a stress generation can be reduced in the insulating body 14 (brittle material). The flexural strength test for the insulating body 14 is carried out according to "Testing method for flexural strength (modulus of rupture) of fine ceramics at room temperature" of JIS R1601.

$$\frac{|\alpha i - \alpha c|[\times 10^{-6}/K] \times 10^{-6} \times \Delta T[K] \times Ec[GPa] \times Ei[GPa]}{(Ec + Ei)[GPa]} \leqq 3 \times Si[GPa] \quad \cdot \cdot \cdot (1)$$

The conducting body 16 is preferably made of a material containing a substance selected from the group consisting of molybdenum, tungsten, silver, copper, nickel, and alloys containing at least one thereof. Examples of such alloys include invar, kovar, inconel (registered trademark), incoloy (registered trademark).

The insulating body 14 is preferably made of a ceramic material such as LTCC (Low Temperature Co-fired Ceramics), which can be fired at a temperature lower than the melting point of the conducting body 16. Specifically, the material for the insulating body 14 preferably includes a composite oxide or composite nitride material containing one or more substances selected from the group consisting of barium oxide, bismuth oxide, titanium oxide, zinc oxide, neodymium oxide, titanium nitride, aluminum nitride, silicon nitride, alumina, silica, and mullite.

Consequently, the first structural body 10A containing the insulating body 14 and the conducting body 16 can have a constitution containing the dense conducting body 16 and the dense insulating body 14 integrated with each other, and can exhibit improved heat resistance, durability, and voltage resistance. Further, the first structural body 10A hardly causes abnormal electrical discharge when used as, for example, a barrier discharge electrode, and can be suitably used as an electrode of an ozone generator.

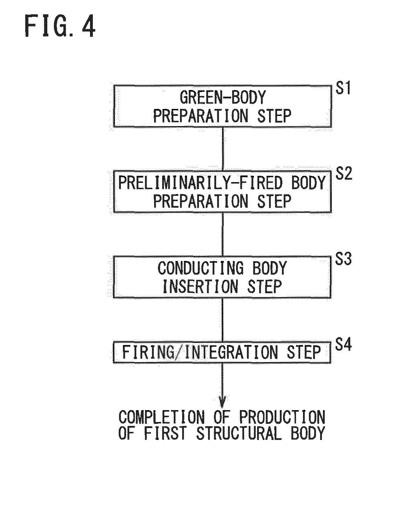

Two methods for producing the first structural body 10A (a first production method and a second production method) will be described below with reference to FIGS. 4 to 7F.

[First Production Method]

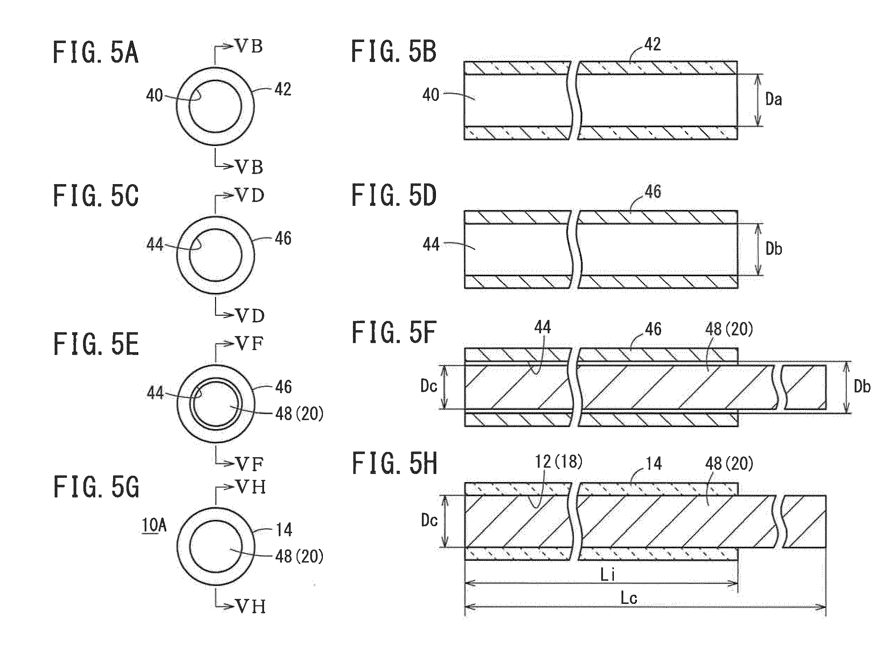

As shown in FIGS. 4 to 5H, the first production method for producing the first structural body 10A contains a green-body preparation step S1 of preparing a green body 42 to be formed into the insulating body 14, the green body 42 having a hollow portion 40 (see FIGS. 5A and 5B), a preliminarily-fired body preparation step S2 of degreasing and preliminarily-firing the green body 42 to prepare a preliminarily-fired body 46 having a hollow portion 44 (see FIGS. 5C and 5D), a conducting body insertion step S3 of inserting a bulk body of the conducting body 16 (a bulk conducting body 48 such as the conducting rod 20, see FIGS. 5E and 5F) into the hollow portion 44 in the preliminarily-fired body 46, and a firing/integration step S4 of firing the preliminarily-fired body 46 together with the bulk conducting body 48 inserted thereinto to produce the first structural body 10A (see FIGS. 5G and 5H).

In the green-body preparation step S1, a starting material slurry is shaped and solidified to prepare the green body. The starting material slurry contains a starting material powder, a dispersion medium, and an organic binder. In addition, the starting material slurry may contain a dispersion aid and a catalyst, as necessary. Specifically, the starting material powder may be a powder of a ceramic containing one or more elements selected from the group consisting of barium, bismuth, titanium, zinc, aluminum, silicon, magnesium, and neodymium. The dispersion medium may be a mixture of an aliphatic polyhydric ester and a polybasic acid ester, or ethylene glycol. The organic binder may be a gelling agent or the like. In a case where the green body 42 has, for example, an extruded shape with the hollow portion 40 (through-hole) as shown in FIGS. 5A and 5B, the organic binder may be a substance other than the gelling agent (i.e., a substance that is hardened not by a chemical reaction but by drying), etc. Of course, in a case where the green body 42 has a shape other than the extruded shape, the gelling agent should preferably be used. In this case, the gelling agent may include a substance that is hardened by a hardening reaction (a chemical reaction such as a urethane reaction). For example, the gelling agent may include a combination of a modified polymethylene polyphenyl polyisocyanate and a polyol. The dispersion medium may be a mixture of a dibasic acid ester. The dispersion aid may be a polycarboxylic acid-based copolymer. The catalyst may be a tertiary amine, and specific examples thereof include 6-dimethylamino-1-hexanol or the like.

For example, in the case of preparing the green body 42 having the extruded shape with the through-hole being formed as the hollow portion 40, the starting material slurry can be preferably shaped by extrusion molding. The inner diameter Da of the hollow portion 40 in the green body 42 is slightly larger than the outer diameter Dc of the bulk conducting body 48, whereby the bulk conducting body 48 can be easily inserted.

In the case of using the extrusion molding, a long body extruded from an extruder is cut into the green bodies 42 having a predetermined length, and successively the green bodies 42 are degreased and preliminary-fired. Alternatively, a long body extruded from the extruder is cut into the green bodies 42 having a predetermined length while being degreased and preliminary-fired. Therefore, the steps can be continuously carried out to improve the productivity.

Of course, in the case of using the gelling agent in the organic binder, the starting material slurry may be shaped by using a mold having a molding cavity corresponding to the tubular insulating body 14. In this case, the molding cavity of the mold is filled with the starting material slurry, whereby the starting material slurry is molded into a shape corresponding to the tubular shape of the insulating body 14. The molded starting material slurry is solidified via the hardening reaction of the gelling agent. The solidified slurry is separated (demolded) from the mold, and then degreased and preliminary-fired. This process, which contains molding the starting material slurry including the starting material powder, the dispersion medium, and the gelling agent, and solidifying the molded slurry via the hardening reaction of the gelling agent to thereby prepare the green body 42, is known as "a gel casting process".

In the preliminarily-fired body preparation step S2, the shaped green body is degreased and then preliminary-fired. The degreasing is a treatment for burning to remove an organic component such as a binder from the green body. The green body becomes brittle temporarily by the removal of the binder. The preliminary-firing is a treatment for sintering the brittle green body to some extent to obtain the preliminarily-fired body that is strong enough to handle. Incidentally, the preliminarily-fired body is not brought into a sufficiently-sintered state, wherein significant firing shrinkage does not occur. More specifically, for example, the green body 42 is preliminarily-fired in an air atmosphere at a temperature of 400°C to 800°C for 1 to 8 hours. In view of handling in the following step, the temperature is increased until the firing treatment proceeds to such an extent that the green body 42 can have such a sufficient strength (i.e., the preliminarily-fired body 46 is obtained). As described above, the preliminarily-fired body 46 is not significantly shrunk by sintering in this step. Therefore, the inner diameter Db of the hollow portion 44 in the preliminarily-fired body 46 is approximately equal to the inner diameter Da of the hollow portion 40 in the green body 42, and the bulk conducting body 48 can be easily inserted thereinto.

In the conducting body insertion step S3, as shown in FIGS. 5E and 5F, the bulk solid conducting body 48 (the conducting rod 20 in this case) is inserted into the hollow portion 44 in the prepared preliminarily-fired body 46. Though the bulk conducting body 48 is placed at the center of the hollow portion 44 in FIGS. 5E and 5F, the bulk conducting body 48 may be brought into partial contact with the inner wall surface of the hollow portion 44 in or after the process of inserting the bulk conducting body 48.

The preliminarily-fired body 46 has a stiffness property. Therefore, the bulk conducting body 48 can be easily inserted into the hollow portion 44 in the preliminarily-fired body 46, and the preliminarily-fired body 46 can be easily handled. Thus, the bulk conducting body 48 can be automatically inserted using a robot or the like or while the preliminarily-fired body 46 is conveyed. For example, the bulk conducting body 48 may be a cylindrical solid made of a metal or cermet material containing molybdenum or a molybdenum alloy. In the following firing step, the preliminarily-fired body 46 is subjected to firing shrinkage, while the bulk conducting body 48 is not shrunk by the firing. Thus, the outer diameter Dc of the bulk conducting body 48 (the conducting rod 20) is set to be smaller than the inner diameter Db of the hollow portion 44 (through-hole) in the preliminarily fired body 46 (see FIG. 5D) by the amount of the firing shrinkage of the preliminarily-fired body 46.

In the firing/integration step S4, the preliminarily-fired body is fired together with the bulk conducting body 48 inserted thereinto. For example, the firing is carried out in an oxygen-free atmosphere (such as a nitrogen or argon atmosphere). The oxygen-free atmosphere is not limited to an atmosphere completely free from oxygen, and may be, for example, the following atmosphere (a) or (b):

(a) an atmosphere provided by introducing nitrogen or argon into a firing furnace, while discharging air from the firing furnace, to replace the air by the nitrogen or argon; or

(b) an atmosphere provided by introducing nitrogen or argon into the firing furnace after vacuating the firing furnace.

In the firing/integration step, the firing temperature is 900°C to 1600°C, preferably 900°C to 1050°C. When the firing temperature is within the preferred range, the choice range of the material for the conducting body can be enlarged. For example, in the case of using an alumina as the material for the insulating body, the upper limit of the firing temperature is 1600°C. The firing time is 1 to 10 hours.

The firing treatment may be carried out while maintaining an atmosphere containing a small amount of oxygen. However, in the case of performing the firing in the oxygen-free atmosphere as described above, it is not necessary to control the atmosphere containing a small amount of oxygen, and the insulating body 14 can be easily sintered while oxidation of the bulk conducting body 48 is prevented.

The preliminarily-fired body 46 is shrunk by the firing. As a result, a so-called shrinkage fitting of the bulk conducting body 48 is achieved. Thus, the fired insulating body 14 and the bulk conducting body 48 are strongly connected and integrated with each other. Consequently, the first structural body 10A, which contains the insulating body 14 and the bulk conducting body 48 (the conducting rod 20) embedded in the hollow portion 12 of the insulating body 14, is produced (see FIGS. 5G, 5H, and 1A to 1D). An intermediate layer containing a main component (such as molybdenum) of the bulk conducting body 48 may be formed at the boundary between the insulating body 14 and the bulk conducting body 48. The intermediate layer is formed due to diffusion of the main component of the bulk conducting body 48 into the insulating body 14 in the firing treatment.

[Second Production Method]

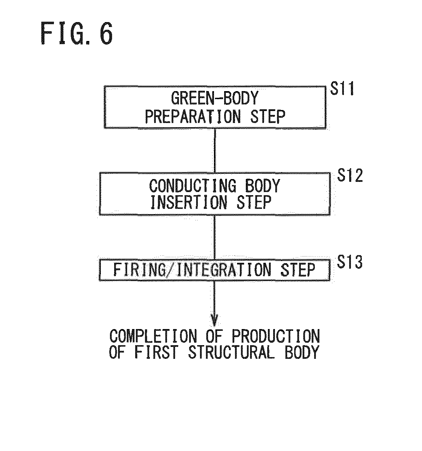

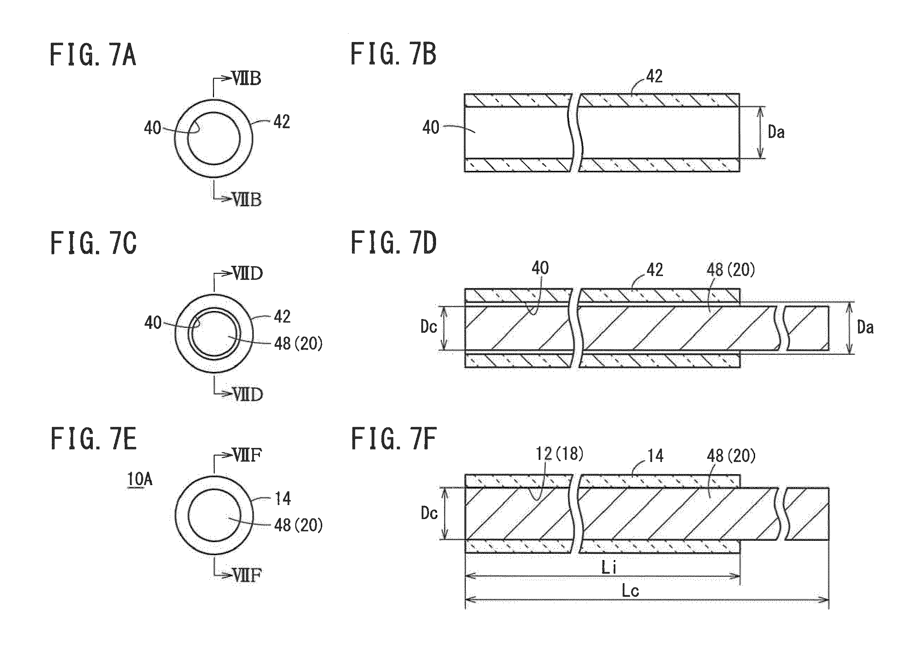

As shown in FIGS. 6 to 7F, the second production method for producing the first structural body 10A contains a green-body preparation step S11 of preparing a green body 42 (see FIGS. 7A and 7B) to be formed into the insulating body 14, the green body 42 having a hollow portion 40, a conducting body insertion step S12 of inserting a bulk body of the conducting body 16 (a bulk conducting body 48 such as the conducting rod 20, see FIGS. 7C and 7D) into the hollow portion 40 in the green body 42, and a firing/integration step S13 of firing the green body 42 together with the bulk conducting body 48 inserted thereinto to produce the first structural body 10A (see FIGS. 7E and 7F).

In the green-body preparation step S11, the starting material slurry is shaped and solidified to prepare the green body 42 shown in FIGS. 7A and 7B in the same manner as the green-body preparation step S1 in the first production method.

In the conducting body insertion step S12, as shown in FIGS. 7C and 7D, the bulk solid conducting body 48 (the conducting rod 20 in this case) is inserted into the hollow portion 40 in the prepared green body 42. Though the bulk conducting body 48 is placed at the center of the hollow portion 40 in FIGS. 7C and 7D, the bulk conducting body 48 may be brought into partial contact with the inner wall surface of the hollow portion 40 in or after the process of inserting the bulk conducting body 48. In the following firing step, the green body 42 is subjected to firing shrinkage, while the bulk conducting body 48 is not shrunk by the firing. Thus, the outer diameter Dc of the bulk conducting body 48 (the conducting rod 20) is set to be smaller than the inner diameter Da of the hollow portion 40 (through-hole) in the green body 42 by the amount of the firing shrinkage of the green body 42.

In the firing/integration step S13, the green body 42 is fired together with the bulk conducting body 48 inserted thereinto. For example, the firing is carried out in a weakly oxidizing atmosphere containing an inert gas such as a humidified nitrogen or argon gas (an atmosphere having a low oxygen partial pressure) at a temperature of 900°C to 1600°C (preferably 900°C to 1050°C) for 1 to 20 hours. The humidification is achieved by bubbling of the inert gas in water having a temperature of 10°C to 80°C. The firing is carried out in the weakly oxidizing atmosphere because of the following reasons:

(1) a certain level of oxidizing atmosphere is required for firing and removing the gelling agent; and
(2) the oxygen partial pressure in the oxidizing atmosphere is required to be small in order to prevent excess oxidation of the bulk conducting body 48.

In the above firing, the green body 42 is subjected to firing shrinkage. As a result, a so-called shrinkage fitting of the bulk conducting body 48 is achieved. Thus, the fired insulating body 14 and the bulk conducting body 48 are strongly connected and integrated with each other.

In the first and second production methods, in the case of using the gel casting process in the green-body preparation steps S1 and S11, a submicron starting material powder can be used and significantly uniformly distributed in the green body 42. Therefore, the firing shrinkage ratio can be highly accurately controlled, and a dense sintered body (the insulating body 14) can be prepared without defects. The denseness is effective in improving the voltage resistance of the electrode.

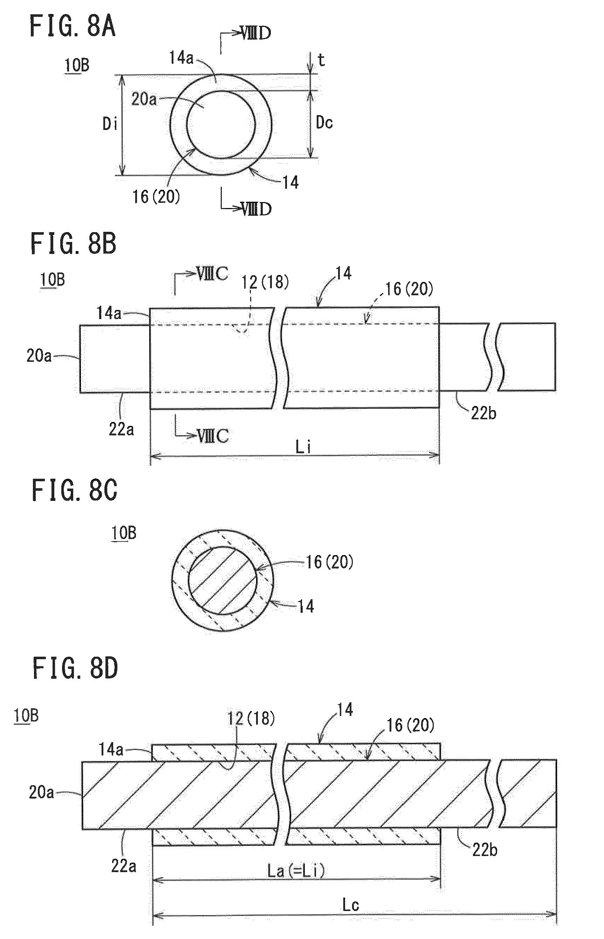

Other preferred examples of the structural body 10 include those shown in FIGS. 8A to 10D.

As shown in FIGS. 8A to 8D, a structural body according to a second embodiment (hereinafter referred to as a second structural body 10B) is similar to the first structural body 10A, but is different from the first structural body 10A in that both of the one end 22a and the other end 22b of the conducting rod 20 protrude from the insulating body 14. In the second structural body 10B, the contact area Cs between the insulating body 14 and the conducting body 16 (the conducting rod 20) is obtained by multiplying the circumferential length of the conducting rod 20 by the axial direction length Li of the insulating body 14, i.e. by using $Cs = \pi \times Dc \times Li$, in the same manner as the first structural body 10A. The axial direction length La of the contact portion between the hollow portion 12 and the conducting body 16 is equal to the axial direction length Li of the insulating body 14.

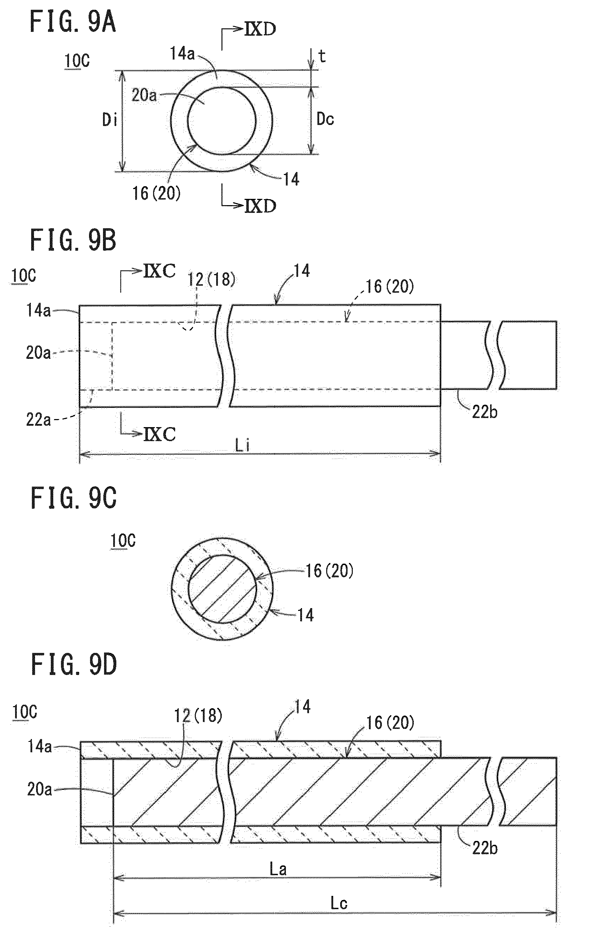

As shown in FIGS. 9A to 9D, a structural body according to a third embodiment (hereinafter referred to as a third structural body 10C) is similar to the first structural body 10A, but is different from the first structural body 10A in that the one end surface 20a of the conducting rod 20 is positioned inside the hollow portion 12 (the through-hole 18) of the insulating body 14 and the one end 22a of the conducting rod 20 does not protrude from the insulating body 14. In the third structural body 10C, the contact area Cs between the insulating body 14 and the conducting body 16 (the conducting rod 20) is obtained by multiplying the circumferential length of the conducting rod 20 by the axial direction length La (see FIG. 9D) of the contact portion between the hollow portion 12 and the conducting rod 20, i.e. by using $Cs = n \times Dc \times La$, unlike the first structural body 10A.

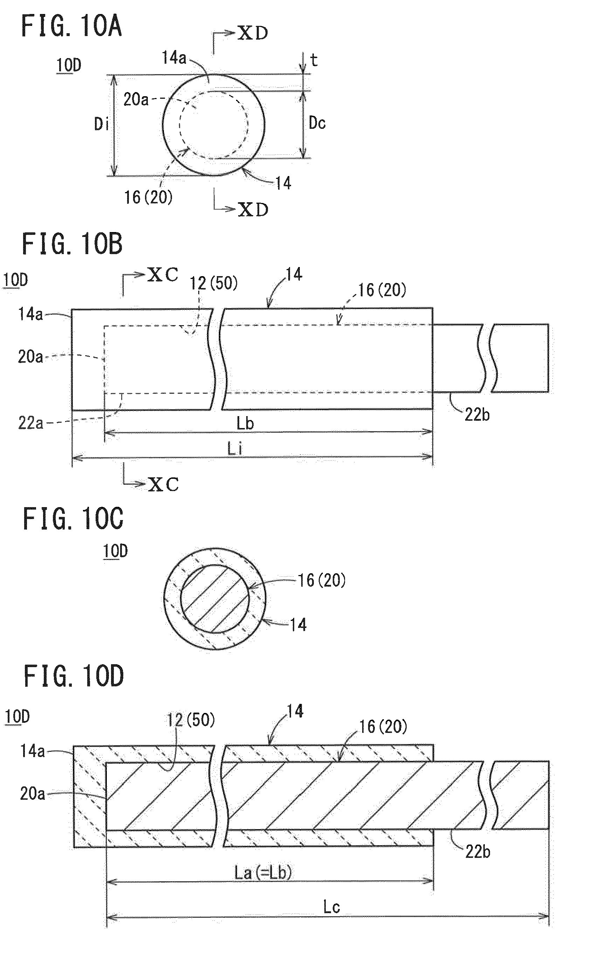

As shown in FIGS. 10A to 10D, in a structural body according to a fourth embodiment (hereinafter referred to as a fourth structural body 10D), the hollow portion 12 in the insulating body 14 is not the through-hole but a hole 50 wherein one end of the hole 50 is opened, and the other end is closed. The conducting rod 20 is inserted into the hole 50. In the fourth structural body 10D, the contact area Cs between the insulating body 14 and the conducting body 16 (the conducting rod 20) corresponds to the contact area between the inner periphery of the hollow portion 12 in the insulating body 14 (not including the bottom of the hole 50) and the outer periphery of the conducting rod 20 (not including the one end surface 20a). Therefore, the contact area Cs is obtained by multiplying the circumferential length of the conducting rod 20 by the axial direction length Lb of the hole 50, i.e. by using $Cs = \pi \times Dc \times Lb$. The axial direction length La of the contact portion between the hollow portion 12 and the conducting body 16 is equal to the axial direction length Lb of the hole 50.

The green body 42 in the first structural body 10A to the third structural body 10C has the extruded shape, and therefore can be preferably prepared by extrusion molding. The green body 42 in the fourth structural body 10D does not have the extruded shape, and therefore can be preferably prepared using the mold.

Though the insulating body 14 has the cylindrical shape with the circular section in the first structural body 10A to the fourth structural body 10D, the insulating body 14 may have a polygonal-tubular shape with a polygonal cross-section such as a triangular, quadrangular, pentangular, hexangular, or octangular section. The conducting rod 20 may have a polygonal-columnar shape with a polygonal cross-section such as a triangular, quadrangular, pentangular, hexangular, or octangular section corresponding to the shape of the insulating body 14.

In Examples 1 to 7 and Comparative Example 1, the thermal expansion coefficient difference ($\alpha$i-$\alpha$c) [$\times 10^{-6}$/K] between an insulating body and a conducting body, the Young's moduli [GPa] of the insulating body and the conducting body, the firing temperature [°C] for producing a structural body, the flexural strength [GPa] of the insulating body, the displacements of the conducting body with respect to the insulating body under loads (applied to the conducting body) of 2 kgf (condition 1) and 5 kgf (condition 2) in the above-described tensile test (see FIG. 2), and the results of an endurance test and a withstand voltage test were evaluated. The displacement under each of the conditions 1 and 2 is expressed as a percentage (%) of the displacement length of the conducting body with respect to the insulating body to the axial direction length of the contact portion between the hollow portion and the conducting body.

[Endurance test]

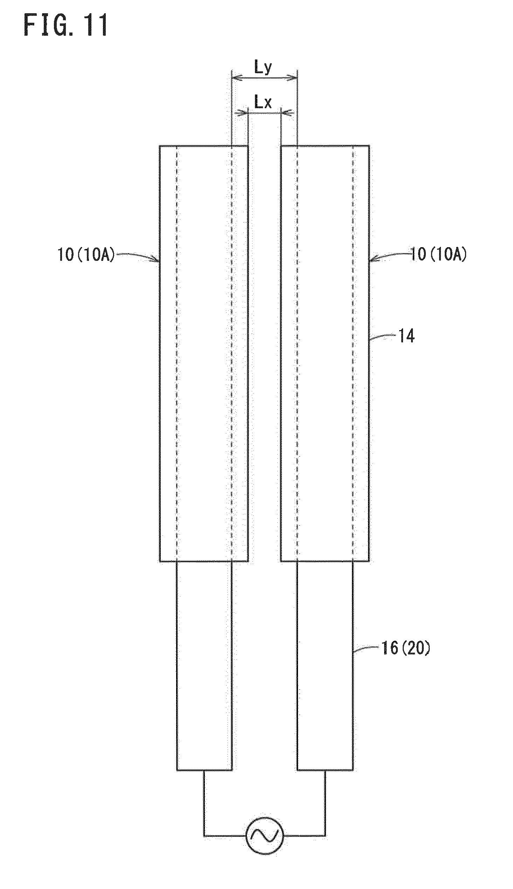

As shown in FIG. 11, in the same manner as the above-described withstand voltage test, two structural bodies 10 having the same shape were prepared and arranged parallel to each other. The distance Lx between the arranged structural bodies 10 (the distance between the outer surfaces of the insulating bodies 14 facing each other) was twice as large as the thickness t of the insulating body 14. In this example, the insulating body 14 had an outer diameter of 1.0 mm and an inner diameter of 0.5 mm, and thus the distance Lx was 0.5 mm. In this endurance test, an alternating voltage of $\pm 4$ kV and 20 kHz was applied between the two structural bodies 10 for 50 hours. In a case where the structural body 10 did not cause insulation breakdown and the appearance of the structural body 10 was not changed (discolored or the like) after the voltage application for 50 hours, the structural body 10 was evaluated as "Excellent". In a case where the structural body 10 caused insulation breakdown or the appearance of the structural body 10 was changed before the completion of the voltage application for 50 hours, the structural body 10 was evaluated as "Poor".

[Withstand voltage test]

As shown in FIG. 3, two structural bodies 10 having the same shape were prepared and arranged parallel to each other. The distance Lx between the arranged structural bodies 10 was twice as large as the thickness t of the insulating body 14. In this example, the insulating body 14 had an outer diameter of 1.0 mm and an inner diameter of 0.5 mm, and thus the distance Lx was 0.5 mm. In this withstand voltage test, a direct voltage was applied between the structural bodies 10, and the applied voltage was gradually increased. When the average electric field applied between the two structural bodies 10 was increased to 10 kV/mm, the voltage resistance of the structural body 10 was evaluated.

(Example 1)

The structural body of Example 1 had the same constitution as the first structural body 10A. The insulating body 14 had a cylindrical shape with an outer diameter of 1.0 mm, an inner diameter of 0.5 mm, a total length of 60 mm, a Young's modulus of 82 GPa, and a flexural strength of 0.204 GPa. The conducting body 16 was the conducting rod 20 having a cylindrical shape with an outer diameter of 0.5 mm and a Young's modulus of 329 GPa. The structural body was produced by firing at a firing temperature of 910°C. The contact area Cs between the insulating body 14 and the conducting rod 20 was $\pi \times 0.5 \times 60 = 94.2$ mm$^2$. Therefore, the tensile load per unit contact area was 0.021 kgf/mm$^2$ and 0.053 kgf/mm$^2$. The thermal expansion coefficient difference ($\alpha$i-$\alpha$c) between the insulating body 14 and the conducting rod 20 was $6.4 \times 10^{-6}$/K.

(Example 2)

The structural body of Example 2 was the same as that of Example 1 except that the thermal expansion coefficient difference ($\alpha$i-$\alpha$c) was $5.1 \times 10^{-6}$/K, the Young's modulus of the insulating body was 153 GPa, and the flexural strength of the insulating body was 0.239 GPa.

(Example 3)

The structural body of Example 3 was the same as that of Example 1 except that the thermal expansion coefficient difference ($\alpha$i-$\alpha$c) was $5.6 \times 10^{-6}$/K, the Young's modulus of the insulating body was 169 GPa, and the flexural strength of the insulating body was 0.243 GPa.

(Example 4)

The structural body of Example 4 was the same as that of Example 1 except that the thermal expansion coefficient difference ($\alpha$i-$\alpha$c) was $-5.3 \times 10^{-6}$/K and the Young's modulus of the conducting body was 120 GPa.

(Example 5)

The structural body of Example 5 was the same as that of Example 1 except that the thermal expansion coefficient difference ($\alpha$i-$\alpha$c) was -6.6×10$^{-6}$/K, the Young's modulus of the insulating body was 153 GPa, the Young's modulus of the conducting body was 120 GPa, and the flexural strength of the insulating body was 0.239 GPa.

(Example 6)

The structural body of Example 6 was the same as that of Example 1 except that the thermal expansion coefficient difference ($\alpha$i-$\alpha$c) was -6.1×10$^{-6}$/K, the Young's modulus of the insulating body was 169 GPa, the Young's modulus of the conducting body was 120 GPa, and the flexural strength of the insulating body was 0.243 GPa.

(Example 7)

The structural body of Example 7 was the same as that of Example 1 except that the thermal expansion coefficient difference ($\alpha$i-$\alpha$c) was 2.2×10$^{-6}$/K, the Young's modulus of the insulating body was 400 GPa, the firing temperature was 1400°C, and the flexural strength of the insulating body was 0.370 GPa.

(Comparative Example 1)

An insulating body and a conducting body were prepared respectively, and were fitted with each other without using a connecting material such as an adhesive. In preparing a structural body of Comparative Example 1, insulating bodies and conducting bodies having various fit dimensions were tried. In cases where the insulating body was broken in the process of inserting the conducting body thereinto, the resultant structural bodies were not used. Of structural bodies in which the conducting body was able to be fitted into the insulating body without breakage, one structural body having the highest fitting strength was used as the structural body of Comparative Example 1. The dimensional relation of Comparative Example 1 was equal to that of Example 1. In Comparative Example 1, the thermal expansion coefficient difference ($\alpha$i-$\alpha$c) was 2.2×10$^{-6}$/K, the Young's modulus of the insulating body was 400 GPa, the Young's modulus of the conducting body was 329 GPa, the firing temperature was 1400°C, and the flexural strength of the insulating body was 0.370 GPa.

<Evaluation Result>

The evaluation results of Examples 1 to 7 and Comparative Example 1 are shown in Table 1.

[Table 1]

| | Thermal expansion coefficient difference $\alpha i$-$\alpha c$ [$\times 10^{-6}$/K] | Young's modulus [GPa] | | Firing temperature [°C] | Flexural strength of insulating body Si [GPa] | Condition 1 | | Condition 2 | | Endurance test result | Withstand voltage test result |
|---|---|---|---|---|---|---|---|---|---|---|---|
| | | Insulating body Ei | Conducing body Ec | | | Tensile load per contact area Ld/Cs [kgf/mm$^2$] | Displacement | Tensile load per contact area Ld/Cs [kgf/mm$^2$] | Displacement | | |
| Examplel 1 | 6.4 | 82 | 329 | 910 | 0.204 | 0.021 | 5% or less | 0.053 | 5% or less | Excellent (not changed) | No insulation breakdown |
| Example2 | 5.1 | 153 | 329 | 910 | 0.239 | 0.021 | 5% or less | 0.053 | 5% or less | Excellent (not changed) | No insulation breakdown |
| Example3 | 5.6 | 169 | 329 | 910 | 0.243 | 0.021 | 50 or less | 0.053 | 5% or less | Excellent (not changed) | No insulation breakdown |
| Example4 | -5.3 | 82 | 120 | 910 | 0.204 | 0.021 | 5% or less | 0.053 | 5% or less | Excellent (not changed) | No insulation breakdown |
| Example 5 | -6.6 | 153 | 120 | 910 | 0.239 | 0.021 | 5% or less | 0.053 | 5% or less | Excellent (not changed) | No insulation breakdown |
| Example6 | -6.1 | 169 | 120 | 910 | 0.243 | 0.021 | 5% or less | 0.053 | 5% or less | Excellent (not changed) | No insulation breakdown |
| Example7 | 2.2 | 400 | 329 | 1400 | 0.370 | 0.021 | 5% or less | 0.053 | 5% or less | Excellent (not changed) | No insulation breakdown |
| Comparative Example 1 | 2.2 | 400 | 329 | 1400 | 0.370 | 0.021 | 5% or less | 0.053 | Dropped out | Poor (discolored) | Insulation breakdown caused |

As shown in Table 1, in each of Examples 1 to 7, the displacements under the conditions 1 and 2 were 5% or less. Furthermore, in the endurance test, the structural body did not cause the insulation breakdown and the appearance of the structural body was not changed (discolored or the like) even after the voltage application for 50 hours. In addition, in the withstand voltage test, the insulation breakdown was not caused even after the electric field applied between the two structural bodies was increased to 10 kV/mm.

In contrast, in Comparative Example 1, though the displacement under the condition 1 was 5% or less, the conducting body was dropped off under the condition 2. Thus, the structural body was brittle. Furthermore, in the endurance test, the surface of the insulating body was partially discolored before the completion of the voltage application for 50 hours. In addition, in the withstand voltage test, the insulation breakdown was caused before the electric field applied between the two structural bodies was increased to 10 kV/mm.

**Claims**

1. A structural body comprising a tubular insulating body (14) having a hollow portion (12) and a conducting body (16) inserted into the hollow portion (12), the insulating body (14) and the conducting body (16) being directly integrated with each other by firing,
   wherein in a tensile test in which the insulating body (14) is fixed, and a portion of the conducting body (16) that protrudes from the insulating body (14) is pulled in an axial direction, a displacement of the conducting body (16) with respect to the insulating body (14) is 5% or less of an axial direction length of a contact portion between the hollow portion (12) and the conducting body (16) under a tensile load per unit contact area between the insulating body (14) and the conducting body (16) of 0.05 kgf/mm$^2$ or less.

2. A structural body comprising a tubular insulating body (14) having a hollow portion (12) and a conducting body (16) inserted into the hollow portion (12), the insulating body (14) and the conducting body (16) being directly integrated with each other by firing,
   wherein in a withstand voltage test in which two of the structural bodies (10A) having the same shape are prepared and arranged parallel to each other, a distance between the arranged structural bodies (10A) being twice as large as a thickness of the insulating body (14), a direct voltage is applied between the structural bodies (10A), and the applied voltage is gradually increased, the structural bodies (10A) do not cause insulation breakdown even if an average electric field applied between the structural bodies (10A) reaches 10 kV/mm.

3. A structural body comprising a tubular insulating body (14) having a hollow portion (12) and a conducting body (16) inserted into the hollow portion (12), the insulating body (14) and the conducting body (16) being directly integrated with each other by firing,
   wherein in a tensile test in which the insulating body (14) is fixed, and a portion of the conducting body (16) that protrudes from the insulating body (14) is pulled in an axial direction, a displacement of the conducting body (16) with respect to the insulating body (14) is 5% or less of an axial direction length of a contact portion between the hollow portion (12) and the conducting body (16) under a tensile load per unit contact area between the insulating body (14) and the conducting body (16) of 0.05 kgf/mm$^2$ or less, and
   in a withstand voltage test in which two of the structural bodies (10A) having the same shape are prepared and arranged parallel to each other, a distance between the arranged structural bodies (10A) being twice as large as a thickness of the insulating body (14), a direct voltage is applied between the structural bodies (10A), and the applied voltage is gradually increased, the structural bodies (10A) do not cause insulation breakdown even if an average electric field applied between the structural bodies (10A) reaches 10 kV/mm.

4. The structural body according to any one of claims 1 to 3, wherein the structural body satisfies the following relational expression (1):

$$\frac{\left|\alpha i - \alpha c\right|\left[\times 10^{-6}/K\right]\times 10^{-6} \times \Delta T[K]\times Ec[GPa]\times Ei[GPa]}{(Ec+Ei)[GPa]} \leqq 3 \times Si[GPa] \quad \cdot \cdot \cdot (1)$$

where $\alpha i$ represents a thermal expansion coefficient of the insulating body (14), $\alpha c$ represents a thermal expansion coefficient of the conducting body (16), $\Delta T$ represents a difference between the firing temperature and a room temperature, $Ec$ represents a Young's modulus of the conducting body (16), $Ei$ represents a Young's modulus of the insulating body (14), and $Si$ represents a flexural strength of the insulating body (14).

5. The structural body according to claim 4, wherein the thermal expansion coefficient $\alpha i$ of the insulating body (14) and the thermal expansion coefficient $\alpha c$ of the conducting body (16) satisfy the relation of:

$$1 \ [\times 10^{-6}/K] \leq (\alpha i - \alpha c) \leq 8 \ [\times 10^{-6}/K].$$

6. The structural body according to any one of claims 1 to 5, wherein the conducting body (16) is made of a material containing a substance selected from the group consisting of molybdenum, tungsten, silver, copper, nickel, and alloys containing at least one thereof.

7. The structural body according to any one of claims 1 to 6, wherein the insulating body (14) is made of a composite oxide or composite nitride containing one or more substances selected from the group consisting of barium oxide, bismuth oxide, titanium oxide, zinc oxide, neodymium oxide, titanium nitride, aluminum nitride, silicon nitride, alumina, silica, and mullite.

8. The structural body according to any one of claims 1 to 7, wherein the structural body is used for an electrode for dielectric-barrier discharge.

9. The structural body according to any one of claims 1 to 7, wherein the structural body is used for an electrode for dielectric-barrier discharge in an ozone generator.

10. The structural body according to any one of claims 1 to 9, wherein:

the insulating body (14) has an extruded shape with the hollow portion (12) being formed as a through-hole; and
the conducting body (16) is a rod-shaped bulk conducting body (48) inserted into the hollow portion (12) in the insulating body (14).

11. A method for producing the structural body according to any one of claims 1 to 10, comprising:

a green-body preparation step of preparing a green body (42) to be formed into the insulating body (14), the green body (42) having a hollow portion (40);
a preliminarily-fired body preparation step of degreasing and preliminarily-firing the green body (42) to prepare a preliminarily-fired body (46);
a conducting body insertion step of inserting a bulk conducting body (48) into a hollow portion (44) in the preliminarily-fired body (46); and
a firing/integration step of firing the preliminarily-fired body (46) together with the bulk conducting body (48) inserted thereinto to produce the structural body (10A).

12. The method according to claim 11, wherein in the green-body preparation step, the green body (42) is formed into an extruded shape.

13. The method according to claim 11 or 12, wherein in the preliminarily-fired body preparation step, the green body (42) is degreased and preliminarily-fired in an air atmosphere at a temperature lower than a firing temperature of the firing/integration step.

14. The method according to any one of claims 11 to 13, wherein in the firing/integration step, the preliminarily-fired body (46) is fired in an oxygen-free atmosphere at a temperature higher than a degreasing/preliminary-firing temperature of the preliminarily-fired body preparation step.

15. A method for producing the structural body according to any one of claims 1 to 10, comprising:

a green-body preparation step of preparing a green body (42) to be formed into the insulating body (14), the green body (42) having a hollow portion (40);
a conducting body insertion step of inserting a bulk conducting body (48) into the hollow portion in the green body (42); and
a firing/integration step of firing the green body (42) together with the bulk conducting body (48) inserted thereinto to produce the structural body (10A).

**16.** The method according to claim 15, wherein in the firing/integration step, the green body (42) is fired in an atmosphere containing a small amount of oxygen.

**17.** The method according to any one of claims 11 to 16, wherein in the green-body preparation step, a starting material slurry containing at least a starting material powder and a dispersion medium is shaped and solidified to prepare the green body (42).

**18.** The method according to claim 17, wherein the starting material slurry contains, as an organic binder, a gelling agent that is hardened by a chemical reaction.

FIG. 1A

FIG. 1B

FIG. 1C

FIG. 1D

FIG. 2

# FIG. 3

# FIG. 4

```
┌─────────────────────────────┐ S1
│        GREEN-BODY           │
│     PREPARATION STEP        │
└─────────────────────────────┘
               │
┌─────────────────────────────┐ S2
│  PRELIMINARILY-FIRED BODY   │
│     PREPARATION STEP        │
└─────────────────────────────┘
               │
┌─────────────────────────────┐ S3
│      CONDUCTING BODY        │
│      INSERTION STEP         │
└─────────────────────────────┘
               │
┌─────────────────────────────┐ S4
│   FIRING/INTEGRATION STEP   │
└─────────────────────────────┘
               │
               ▼
   COMPLETION OF PRODUCTION
   OF FIRST STRUCTURAL BODY
```

FIG. 5A

FIG. 5B

FIG. 5C

FIG. 5D

FIG. 5E

FIG. 5F

FIG. 5G

FIG. 5H

FIG. 6

| GREEN-BODY PREPARATION STEP | S11 |

| CONDUCTING BODY INSERTION STEP | S12 |

| FIRING/INTEGRATION STEP | S13 |

COMPLETION OF PRODUCTION
OF FIRST STRUCTURAL BODY

# FIG. 7A

# FIG. 7B

# FIG. 7C

# FIG. 7D

# FIG. 7E

# FIG. 7F

EP 2 804 449 A1

FIG. 8A

FIG. 8B

FIG. 8C

FIG. 8D

FIG. 9A

10C

14a

IXD

t

20a

Di

Dc

16 (20)

14

IXD

FIG. 9B

10C

14a

IXC

12 (18)

14

16 (20)

20a

22a

IXC

22b

Li

FIG. 9C

10C

16 (20)

14

FIG. 9D

10C

12 (18)

14

16 (20)

14a

20a

22b

La

Lc

24

FIG. 10A

FIG. 10B

FIG. 10C

FIG. 10D

# FIG. 11

Europäisches
Patentamt

European
Patent Office

Office européen
des brevets

# EUROPEAN SEARCH REPORT

Application Number

EP 14 16 7853

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 564 328 A (BAGLEY RODNEY D ET AL) 16 February 1971 (1971-02-16) * figures 4,7 * * column 5 - column 7 * ----- | 1-4,7, 11-18 | INV. H05H1/24 C04B35/00 |
| X | US 5 698 164 A (KISHIOKA TAKASHI [JP] ET AL) 16 December 1997 (1997-12-16) * column 1, line 66 - column 2, line 13 * * figure 4 * ----- | 1-4,8-10 | |
| X | US 3 243 635 A (LOUDEN WILLIAM C ET AL) 29 March 1966 (1966-03-29) * column 1, line 36 - column 2, line 13 * * figure 1 * ----- | 1-7 | |
| X | US 2012/306369 A1 (TERAZAWA TATSUYA [JP] ET AL) 6 December 2012 (2012-12-06) * figure 4 * * paragraph [0102] - paragraph [0105] * ----- | 1-4,6,8, 10 | |
| A | EP 0 827 177 A2 (NGK INSULATORS LTD [JP]) 4 March 1998 (1998-03-04) * column 4, line 25 - line 57 * ----- | 5 | TECHNICAL FIELDS SEARCHED (IPC) H05H C04B |
| A | EP 0 659 705 A1 (AGENCY IND SCIENCE TECHN [JP]) 28 June 1995 (1995-06-28) * the whole document * ----- | 11-18 | |

The present search report has been drawn up for all claims

| Place of search | Date of completion of the search | Examiner |
|---|---|---|
| The Hague | 14 October 2014 | Clemente, Gianluigi |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 16 7853

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2014

| Patent document cited in search report | | Publication date | Patent family member(s) | | Publication date |
|---|---|---|---|---|---|
| US 3564328 | A | 16-02-1971 | NONE | | |
| US 5698164 | A | 16-12-1997 | CN | 1126939 A | 17-07-1996 |
| | | | JP | 3015268 B2 | 06-03-2000 |
| | | | JP | H08185955 A | 16-07-1996 |
| | | | US | 5698164 A | 16-12-1997 |
| US 3243635 | A | 29-03-1966 | ES | 294827 A1 | 01-07-1964 |
| | | | GB | 1066804 A | 26-04-1967 |
| | | | US | 3243635 A | 29-03-1966 |
| US 2012306369 | A1 | 06-12-2012 | EP | 2665347 A1 | 20-11-2013 |
| | | | US | 2012306369 A1 | 06-12-2012 |
| | | | WO | 2012120928 A1 | 13-09-2012 |
| EP 0827177 | A2 | 04-03-1998 | CN | 1180234 A | 29-04-1998 |
| | | | CZ | 9702722 A3 | 18-03-1998 |
| | | | DE | 69705180 D1 | 19-07-2001 |
| | | | DE | 69705180 T2 | 22-11-2001 |
| | | | EP | 0827177 A2 | 04-03-1998 |
| | | | US | 6027389 A | 22-02-2000 |
| EP 0659705 | A1 | 28-06-1995 | DE | 69403054 D1 | 12-06-1997 |
| | | | DE | 69403054 T2 | 02-01-1998 |
| | | | EP | 0659705 A1 | 28-06-1995 |
| | | | JP | H0829975 B2 | 27-03-1996 |
| | | | JP | H07277814 A | 24-10-1995 |
| | | | US | 5447894 A | 05-09-1995 |

EPO FORM P0459

For more details about this annex : see Official Journal of the European Patent Office, No. 12/82

**EP 2 804 449 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013103563 A
- JP 3015268 B
- JP 2008108331 A